(19) **Europäisches Patentamt European Patent Office Office européen des brevets**

(11) **EP 4 648 428 A1**

(12) **EUROPEAN PATENT APPLICATION**

(43) Date of publication:
**12.11.2025  Bulletin 2025/46**

(21) Application number: **24305729.6**

(22) Date of filing: **10.05.2024**

(51) International Patent Classification (IPC):
**H04N 21/81** (2011.01)

(52) Cooperative Patent Classification (CPC):
**G06T 15/20; H04N 21/8146; H04N 21/816**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
- **SABATER, Neus 35830 BETTON (FR)**
- **CHUPEAU, Bertrand 35700 RENNES (FR)**
- **THUDOR, Franck 35000 RENNES (FR)**
- **SANDRI, Gustavo 35510 CESSON-SEVIGNE (FR)**

(74) Representative: **Vossius & Partner Patentanwälte Rechtsanwälte mbB Siebertstraße 3 81675 München (DE)**

(54) **OVER SEGMENTATION OF 3D GAUSSIANS**

(57) Methods and apparatus are provided to perform over-segmentation of three-dimensional Gaussians to greatly reduce the complexity of subsequent image processing. The over-segmentation process creates super three-dimensional Gaussians to simplify 3DG manipulation. Three-dimensional Gaussians belonging to same segments are radiometrically and/or geometrically homogenous. Further processing, such as compression using intra or inter prediction are performed on three-dimensional Gaussian representatives.

Figure 3

**Description**

TECHNICAL FIELD

At least one of the present embodiments generally relates to a method or an apparatus for video rendering.

BACKGROUND

The general aspects described herein relate to approaches for three-dimensional scene rendering.

SUMMARY

At least one of the present embodiments generally relates to a method or an apparatus for over-segmentation of three-dimensional (3D) Gaussians.

According to a first aspect, there is provided a method. The method comprises steps for initializing points as over-segmented three-dimensional Gaussians, wherein a representative of a Gaussian cluster is initialized with point coordinates of input sparse points and with isotropic shapes; cloning or splitting at least one three-dimensional Gaussian and assigning the cloned or split three-dimensional Gaussian to its same Gaussian cluster; optimizing the cloned or split Gaussians and generating a new segment if a distance metric is greater than a threshold, until the distance metric is lower than the threshold; and, performing subsequent image processing using the optimized Gaussians.

According to a second aspect, there is provided another method. The method comprises steps for computing an octree with an initially fixed voxel size using a point cloud with three-dimensional Gaussian centers; determining a three-dimensional Gaussian representative for each octree voxel based on a characteristic; assigning a matching three-dimensional Gaussian representative to each Gaussian center based on a distance metric belonging to a voxel volume; updating three-dimensional Gaussian representatives belonging to the voxel volume while a residual error is larger than said distance metric until said distance metric is lower than a threshold; and, performing subsequent image processing using the updated three-dimensional Gaussian representatives.

According to another aspect, there is provided an apparatus. The apparatus comprises a processor and a memory. The processor can be configured to perform the operations according to the aforementioned methods.

According to another general aspect of at least one embodiment, there is provided a device comprising an apparatus according to any of the decoding embodiments; and at least one of (i) an antenna configured to receive a signal, the signal including the video block, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

BRIEF DESCRIPTION OF THE DRAWINGS

Figure 1 illustrates an example of a densification process.
Figure 2 illustrates two super three-dimensional (3D) Gaussians.
Figure 3 illustrates simultaneous generation of three-dimensional Gaussians (3DG) and its corresponding over-segmentation.
Figure 4 illustrates an example computation of 3DG segments of an already generated set of 3DGs.
Figure 5 illustrates one embodiment of a first method under the described aspects.
Figure 6 illustrates one embodiment of a second method under the described aspects
Figure 7 illustrates one embodiment of an apparatus under the described aspects.

Figure 8 illustrates a standard, generic, video compression scheme.
Figure 9 illustrates a standard, generic, video decompression scheme.
Figure 10 illustrates a processor-based system for encoding/decoding under the general described aspects.

DETAILED DESCRIPTION

The embodiments described here are in the field of three-dimensional (3D) scene rendering.

Neural Radiance Fields (NeRFs) have proved to be a remarkable method to render new views of a complex scene from a limited number of captured views. During the last three years, a lot of progress has been made to improve the first initial work but computational complexity remains the main bottleneck of this method since NeRFs aim at evaluating the scene luminance for all the points of the 3D volume.

On the other hand, 3D Gaussians (3DGs) have emerged as a new scene representation that is able to render 3D radiance fields with the same quality as NeRFs but much faster. Indeed, 3DG splatting, which is the rendering of 3DGs, avoids unnecessary computation in the empty space to decrease training time and achieve real-time rendering.

Gaussian splatting has already been used in the past in the computer graphics community but recently, with the advent of artificial intelligence and the arrival of very powerful GPUs (General Processing Units), new learning techniques have become popular, creating a paradigm-shift in the realm of 3D scene representation.

The main drawback of 3DG splatting is that it requires a large amount of memory for the storage of the Gaussians. A technical paper reports a memory consumption significantly higher than NeRF-based solutions which may be a hurdle for the deployment of 3DG splatting in consumer devices or low-end GPUs. The solution proposed in another approach generates a large amount of 3DGs due to the densification process during optimization (cloning and splitting). This makes the transmission and manipulation of 3DGs more complicated than it should be.

Even if the memory problem has not yet been solved, the research community is actively investigating 3DG splatting and great advances on this topic are expected in the near future.

The described embodiments propose a method to perform an over-segmentation of 3DGs. Like superpixels in the image domain, the described embodiments propose a method to compute super 3DGs, an over-segmentation of 3DGs. Superpixels are considered as a convenient representation to greatly reduce the complexity of subsequent image processing tasks while being fast to compute. Super 3DGs are proposed here with the same motivation and with one goal being to simplify 3DG manipulation. Indeed, one main idea is that 3DGs belonging to the same segment are radiometrically and/or geometrically homogeneous. Note that the words, *segment, super 3DG* or *cluster* mean the same thing. Grouping 3DGs that are perceptually meaningful and conform object boundaries will be extremely useful to further processing including compression. Each 3DG segment is represented by one particular 3DG, named 3DG representative, that is a perfect candidate for intra or inter prediction or even in the case where a multi-resolution algorithm is deployed. Also provided here is an example of image rendering where super 3DGs are used.

Formally a 3DG is defined as an object in 3D space:

$$G(X) = e^{-\frac{1}{2}(X-\mu)^T \Sigma^{-1}(X-\mu)}$$

characterized by its center $\mu = (x, y, z)$, a 3D covariance matrix $\Sigma$, where $\Sigma$ can be decomposed into a scaling matrix $S$ (with parameters $s_1$, $s_2$ and $s_3$) and a rotation matrix $R$ (encoded into a unit quaternion $q$ with coefficients $q_1$, $q_2$, $q_3$ and $q_4$) for differentiable optimization. Besides the geometric description of each 3DG, other attributes are also considered such as the opacity $\alpha$ and the color $c$, which is usually a list of spherical harmonics $\{c_n | n = 1, ..., N\}$. Note that low degree harmonics encode smooth changes in color where higher degree harmonics encode specularities and non-Lambertian changes.

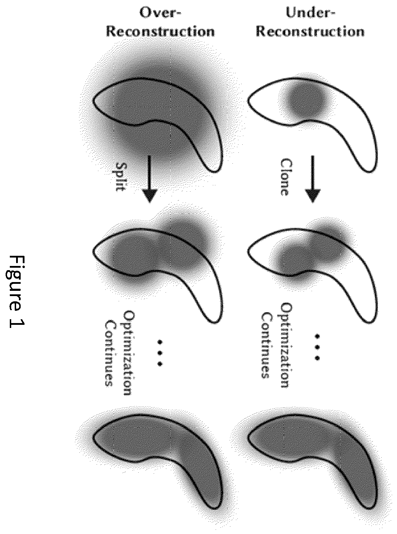

The previously mentioned technical paper has proposed a method to generate the set of 3DGs from a discrete number of input views with one goal to synthetize any other view from a different viewpoint. Technically, that method starts with a sparse number of points provided with Structure from Motion (SfM) along with isotropic 3DGs. During the optimization process, the number of 3DGs increases due to a cloning and a splitting process. In Figure 1, the adaptive control of 3DGs is illustrated. Areas that are not yet well reconstructed have large positional gradients. So, when the gradient is larger than a threshold (a) if the concerned 3DG is small, the 3DG is cloned in the direction of the gradient; and (b) if the 3DG is large in a region with high variance, the 3DG is split into two smaller 3DGs.

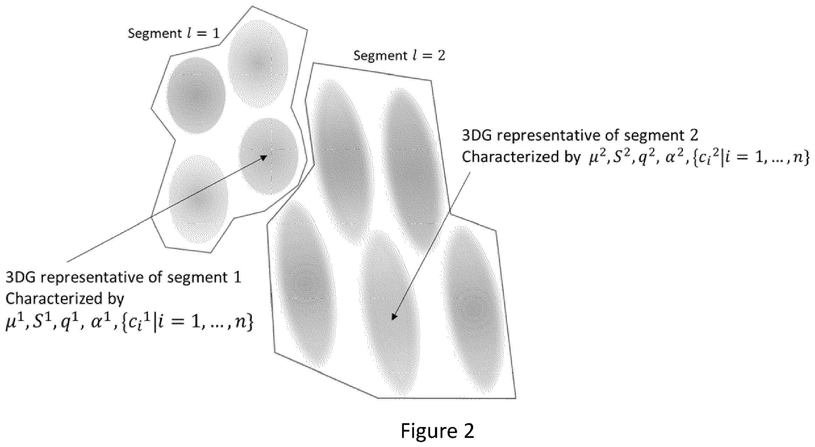

Over-segmentation is the action to group the 3DGs such that the 3DGs in the same segment are close to each other and have some similar characteristics. The similarities can be in color, opacity and/or shape. So, after the over-segmentation process, each 3DG centered at $\mu$ will be assigned to one segment with label $l = 1, ..., L$; $L$ being the total number of final segments in the over-segmentation. Furthermore, each segment $l$ has a 3DG representative which is a 3DG (characterized by its parameters $\mu^l, S^l, q^l, \alpha^l, \{c_i^l | i = 1, ..., n\}$). Figure 2 illustrates the over-segmentation of a small group of 3DGs.

The following embodiments describe two methods to perform the over-segmentation of 3DGs.

**Simultaneous 3DG optimization and over-segmentation.**

In a first approach, the segments are computed at the same time that 3DGs are being generated during the optimization process. The method has the following steps.

A first step is initialization. Each point used as initialization, either via SfM or any other similar method, is initialized as a Super 3D Gaussian. The representative of the given Gaussian cluster is initialized with the point coordinates of the input sparse points and with isotropic shapes ($s_1 = s_2 = s_3$).

A second step is densification. During the densification process explained above and illustrated in Figure 1, when a given 3DG is cloned or split, the new 3DG is assigned to the same Gaussian cluster. After one (or several) optimization steps, the new 3DG may have changed its color, shape, or opacity. So, after one (or several) iterations, the distance between each 3DG and its corresponding Gaussian cluster representative (or Gaussian segment centroid) is computed using the distance defined in Equation 1. If this distance is bigger than a given threshold, a new segment is created making the concerned 3DG the representative of the new segment.

The third step is determining a stop condition: The process ends when the optimization process ends. This is usually after a given number of optimization steps.

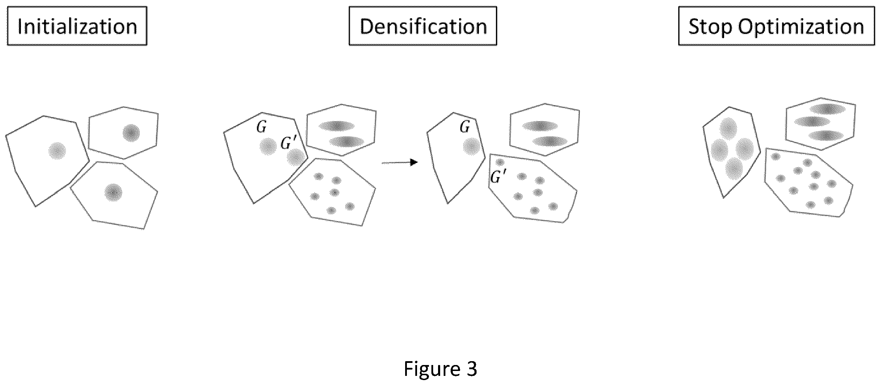

Figure 3 illustrates the simultaneous generation of 3DG and its corresponding over-segmentation.

**Over-segmentation of a set of already generated 3DGS.**

In this second method, 3DGs have already been computed, and eventually preprocessed, using any existing method to generate 3DGs and the over-segmentation takes place afterwards. In particular, the method has the following steps.

A first step in the second method is initialization. Considering the point cloud given by all the 3D Gaussian centers $\mu$, an octree is computed with an initially fixed voxel size ($W \times W \times W$). Then, for each octree volume, one 3DG segment representative is defined. For example, the 3DG representative can be the 3D Gaussian into the voxel volume that is closer to the center voxel position. Another example is to choose the 3DG representative as the most meaningful 3DG into the voxel volume in terms of color and/or shape. Another example is to choose the 3DG representative as the 3DG with smaller color gradients with respect to its neighbors.

A second step of the second method is an update step. For each segment representative, assign the best matching 3DG according to the distance in Equation 1 and belonging to a voxel volume of at least ($2W \times 2W \times 2W$). Once all 3DG have been assigned to one segment, update the 3DG representatives with the new elements belonging to the segment.

The third step of the second method is determining a stop condition. Repeat the update while the residual error (sum of distances between subsequent representatives) is larger than a threshold. This means that after each update, the distance between the previous and current 3DGs centers is computed. This method stops when the sum of all these distances is smaller than a threshold, meaning that the 3DG representatives barely move after the update.

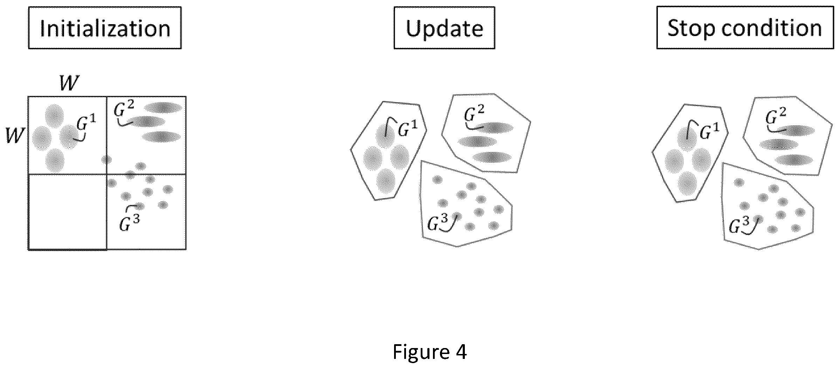

Figure 4 illustrates the computation of 3DG segments of an already generated set of 3DGs.

**Definition of the distance between 3DGs.**

There are several distances that can be considered between two 3DGs with index i and j:

a) Distance based on its position in the 3D space. For example, the Euclidian distance

$$d_{xyz} = \sqrt{(x^i - x^j)^2 + (y^i - y^j)^2 + (z^i - z^j)^2}$$

or using the $L^1$-norm:

$$d'_{xyz} = |x^i - x^j| + |y^i - y^j| + |z^i - z^j|$$

b) Difference in shape of the Gaussians. For example, the volume difference:

$$d_S = \frac{4\pi}{3} |s_1^i s_2^i s_3^i - s_1^j s_2^j s_3^j|$$

c) Difference in orientation such as

$$d_q = cos^{-1}\left(2 < q^i, q^j >^2 - 1\right) \qquad \text{or} \qquad d'_q = 1 - < q^i, q^j >^2$$

where $< q^i, q^j > = q_1^i q_1^j + q_2^i q_2^j + q_3^i q_3^j + q_4^i q_4^j$ is the inner product of quaternions $q^i$ and $q^j$.

d) Difference in opacity:

$$d_\alpha = \sqrt{(\alpha^i - \alpha^j)^2} \qquad \text{or} \qquad d'_\alpha = |\alpha^i - \alpha^j|$$

e) Difference in color:

$$d_c = \sqrt{\sum_{n=1}^{N} (c_n^i - c_n^j)^2}$$

Finally, the distance between two 3D Gaussians is defined as the weighted sum of the position, shape, orientation opacity and color distances:

$$D_{ij} = \lambda_{xyz} d_{xyz} + \lambda_S d_S + \lambda_q d_q + \lambda_\alpha d_\alpha + \lambda_c d_c \qquad (1)$$

where parameters $\lambda_{xyz}$, $\lambda_S$, $\lambda_q$, $\lambda_\alpha$ and $\lambda_c$ balance the prominence of each term. In particular, one or more values of $\lambda$ can be equal to 0, meaning that the corresponding distance is not considered as the final criterion to compute the 3D Gaussian over-segmentation.

**Application of the Super 3D Gaussians during rendering.**

Once 3DGs have been generated from a discrete number of input views, a new view direction which is not necessarily one of the input captured views, can be generated in real-time. As it has been presented in, after tiling the image plane and ordering the 3DGs according to their depth, the corresponding 3DGs are projected (splatted) into the new view image plane using the well-known $\alpha$-blending model.

However, having a large number of 3DGs with a large number of parameters (e.g. 59 parameters for each 3DG) is cumbersome. To solve this problem, the over-segmentation of 3DGs is helpful. In detail, consider M segments with its corresponding 3DG representatives $G_1, ..., G_M$ for the considered 3D scene. Different solutions are possible depending on the targeted view quality.

Only, the 3DG positions $\mu$ and the parameters of the representatives $G_1, ..., G_M$ have been stored. In this case, for each position $\mu$ its corresponding Gaussian representative $G_{l(\mu)}$ is projected, where $l(\mu)$ is the assigned label to the 3DG centered at $\mu$.

For all 3DGs, only a subset of parameters has been stored besides its 3DG positions $\mu$ and the parameters of the representatives $G_1, ..., G_M$. In this case, for each position $\mu$, a recovered 3D Gaussian is projected with the available stored parameters for position $\mu$ and the parameters from $G_{l(\mu)}$ for the lacking ones. For instance, segments corresponding to low textured, and color homogeneous areas may not store all the spherical harmonics coefficients but only spherical harmonics corresponding to low degree. In this example, the rendering quality via the proposed 3DGs over-segmentation remains almost the same while the number of stored parameters decreases.

The described embodiments allow performing an over-segmentation of the recently proposed 3D Gaussians representation. The proposed over-segmentation along with the 3D Gaussian representative of each segment is extremely useful for the subsequent compression and editing tasks.

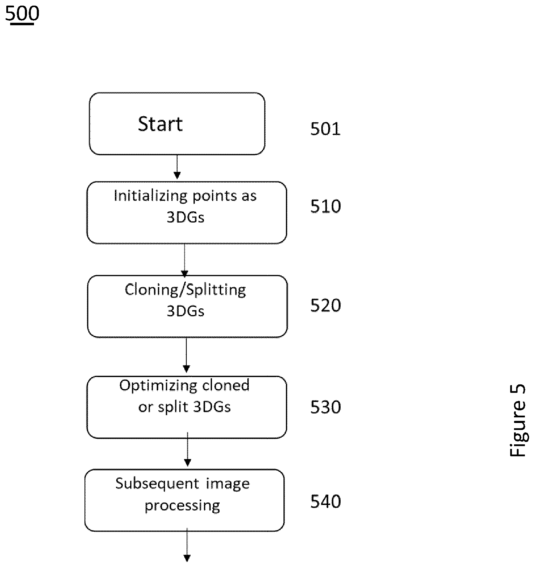

One embodiment of a method 500 under the general aspects described here is shown in Figure 5. The method commences at start block 501 and control proceeds to block 510 for initializing points as over-segmented three-dimensional Gaussians, wherein a representative of a Gaussian cluster is initialized with point coordinates of input sparse points and with isotropic shapes. Control proceeds from block 510 to block 520 for cloning or splitting at least one three-dimensional Gaussian and assigning the cloned or split three-dimensional Gaussian to its same Gaussian cluster. Control proceeds from block 520 to block 530 for optimizing the cloned or split Gaussians and generating a new segment if a distance metric is greater than a threshold, until the distance metric is lower than the threshold. Control proceeds from block 530 to block 540 for performing subsequent image processing using the optimized Gaussians.

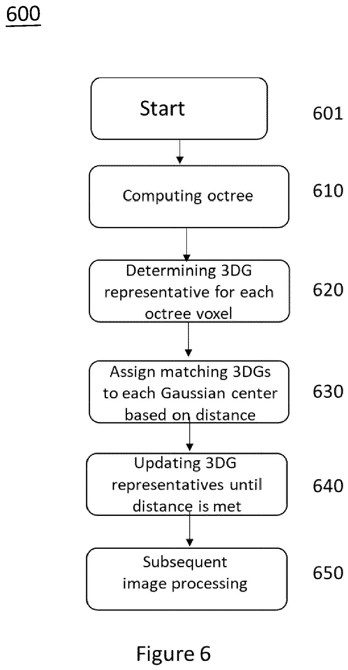

Another embodiment of a method 600 under the general aspects described here is shown in Figure 6. The method commences at start block 601 and control proceeds to block 610 for computing an octree with an initially fixed voxel size using a point cloud with three-dimensional Gaussian centers. Control proceeds from block 610 to block 620 for determining a three-dimensional Gaussian representative for each octree voxel based on a characteristic. Control proceeds from block 620 to block 630 for assigning a matching three-dimensional Gaussian representative to each Gaussian center based on a distance metric belonging to a voxel volume. Control proceeds from block 630 to block 640 for updating three-dimensional Gaussian representatives belonging to the voxel volume while a residual error is larger than said distance metric until said distance metric is lower than a threshold. Control proceeds from block 640 to block 650 for performing subsequent image processing using the updated Gaussian three-dimensional representatives.

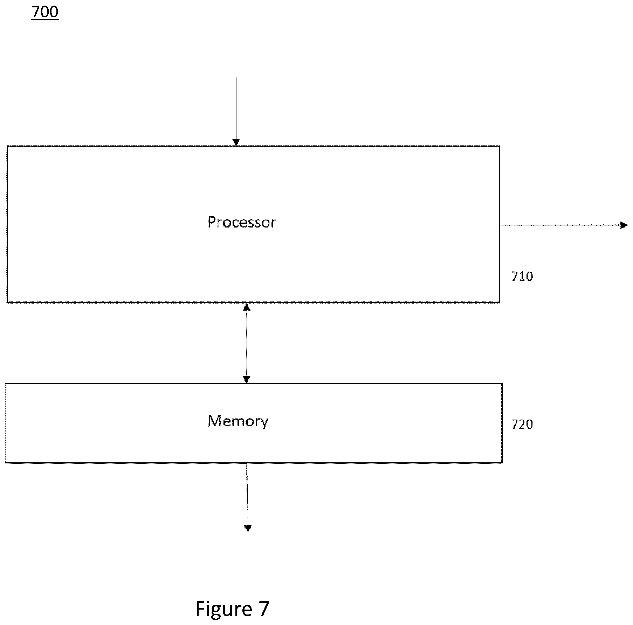

Figure 7 shows one embodiment of an apparatus 700 for over-segmentation of three-dimensional Gaussians using the aforementioned methods. The apparatus comprises Processor 710 and can be interconnected to a memory 720 through at least one port. Both Processor 710 and memory 720 can also have one or more additional interconnections to external connections.

Processor 710 is also configured to either insert or receive information in a bitstream and, either compressing, encoding, or decoding using any of the described aspects.

The embodiments described here include a variety of aspects, including tools, features, embodiments, models, approaches, etc. Many of these aspects are described with specificity and, at least to show the individual characteristics, are often described in a manner that can sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

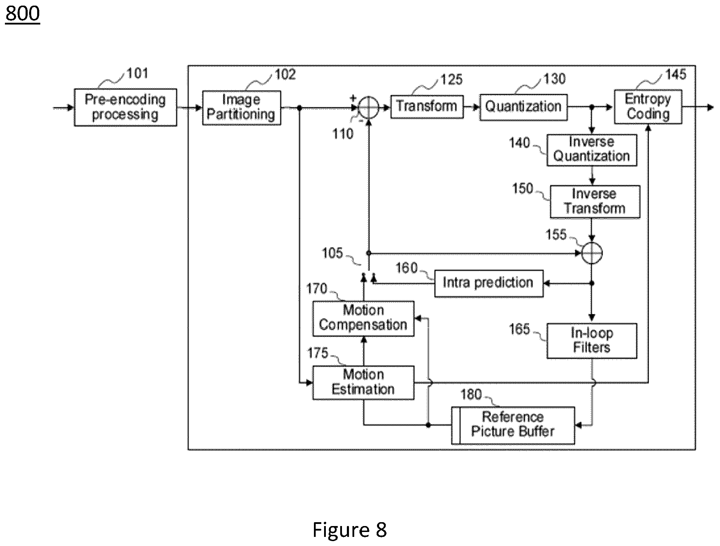

The aspects described and contemplated in this application can be implemented in many different forms. Figures 8, 9, and 10 provide some embodiments, but other embodiments are contemplated and the discussion of Figures 8, 9, and 10 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" can be used interchangeably, the terms "pixel" and "sample" can be used interchangeably, the terms "image," "picture" and "frame" can be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions can be modified or combined.

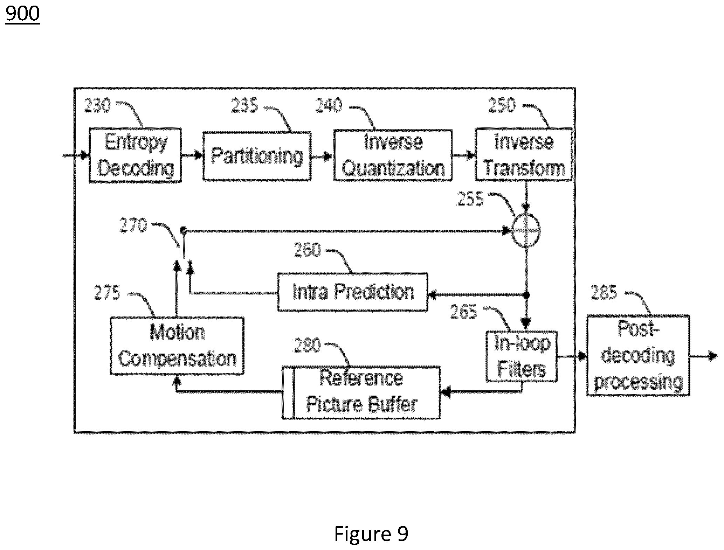

Various methods and other aspects described in this application can be used to modify modules, for example, the intra prediction, entropy coding, and/or decoding modules (160, 260, 145, 230), of a video encoder 100 and decoder 200 as shown in Figure 8 and Figure 9. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application. The specific values are for example purposes and the aspects described are not limited to these specific values.

Figure 8 illustrates an encoder 100. Variations of this encoder 100 are contemplated, but the encoder 100 is described below for purposes of clarity without describing all expected variations.

Before being encoded, the video sequence can go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 9 illustrates a block diagram of a video decoder 200. In the decoder 200, a bitstream is decoded by the decoder elements as described below. Video decoder 200 generally performs a decoding pass reciprocal to the encoding pass as described in Figure 8. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder can therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YcbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

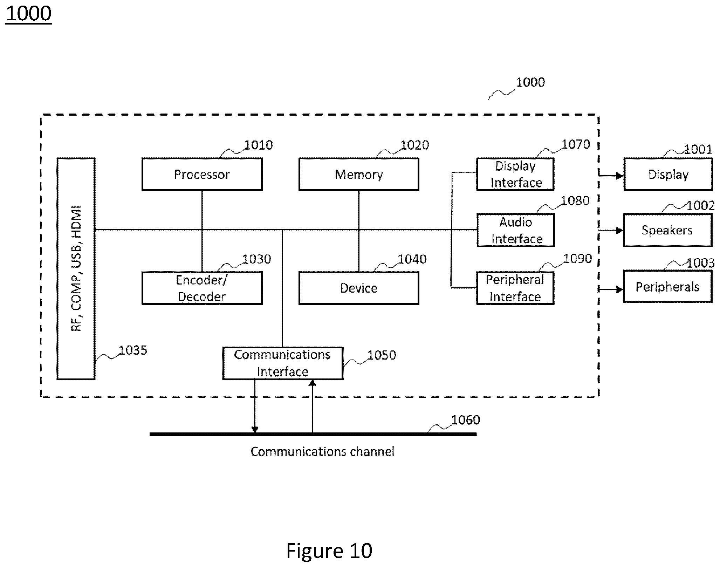

Figure 10 illustrates a block diagram of an example of a system in which various aspects and embodiments are implemented. System 1000 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1035. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High-Definition Multimedia Interface (HDMI) input terminal. Other examples, not shown in Figure 10, include composite video.

In various embodiments, the input devices of block 1035 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1035. Still other embodiments provide streamed data to the system 1000 using the RF connection of the input block 1035. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1001, speakers 1002, and other peripheral devices 1003. The display 1001 of various embodiments includes one or more of, for example, a touchscreen display, an organic light-emitting diode (OLED) display, a curved display, and/or a foldable display. The display 1001 can be for a television, a tablet, a laptop, a cell phone (mobile phone), or another device. The display 1001 can also be integrated with other components (for example, as in a smart phone), or separate (for example, an external monitor for a laptop). The other peripheral devices 1003 include, in various examples of embodiments, one or more of a stand-alone digital video disc (or digital versatile disc) (DVR, for both terms), a disk player, a stereo system, and/or a lighting system. Various embodiments use one or more peripheral devices 1003 that provide a function based on the output of the system 1000. For example, a disk player performs the function of playing the output of the system 1000.

In various embodiments, control signals are communicated between the system 1000 and the display 1001, speakers 1002, or other peripheral devices 1003 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1001 and speakers 1002 can be integrated in a single unit with the other components of system 1000 in an electronic device such as, for example, a television. In various embodiments, the display interface 1070 includes a display driver, such as, for example, a timing controller (T Con) chip.

The display 1001 and speaker 1002 can alternatively be separate from one or more of the other components, for example, if the RF portion of input 1035 is part of a separate set-top box. In various embodiments in which the display 1001 and speakers 1002 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments can refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. Rate distortion optimization is usually formulated as minimizing a rate distortion function, which is a weighted sum of the rate and of the distortion. There are different approaches to solve the rate distortion optimization problem. For example, the approaches can be based on an extensive testing of all encoding options, including all considered modes or coding parameters values, with a complete evaluation of their coding cost and related distortion of the reconstructed signal after coding and decoding. Faster approaches can also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application can refer to "determining" various pieces of information. Determining the information can include one or more of, for example, estimating the information, calculating the information, predicting the information, or retrieving the information from memory.

Further, this application can refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application can refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This can be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of transforms, coding modes or flags. In this way, in an embodiment the same transform, parameter, or mode is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments.

While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding sections describe a number of embodiments, across various claim categories and types. Features of these embodiments can be provided alone or in any combination. Further, embodiments can include one or more of the following features, devices, or aspects, alone or in any combination, across various claim categories and types:

At least one embodiment comprises over-segmentation of three-dimensional Gaussians (3DG)..

At least one embodiment comprises the preceding embodiment, further comprising subsequent image processing.

At least one embodiment comprises the preceding embodiments, further comprising performing intra or inter prediction on 3DG segments, represented by one particular 3DG.

At least one embodiment comprises any encoding or decoding operation based on the above operations.

At least one embodiment comprises a bitstream or signal that includes one or more of the described syntax elements, or variations thereof.

At least one embodiment comprises a bitstream or signal that includes syntax conveying information generated according to any of the embodiments described.

At least one embodiment comprises creating and/or transmitting and/or receiving and/or decoding according to any of the embodiments described.

At least one embodiment comprises a method, process, apparatus, medium storing instructions, medium storing data, or signal according to any of the embodiments described.

At least one embodiment comprises inserting in the signaling syntax elements that enable the decoder to determine decoding information in a manner corresponding to that used by an encoder.

At least one embodiment comprises creating and/or transmitting and/or receiving and/or decoding a bitstream or signal that includes one or more of the described syntax elements, or variations thereof.

At least one embodiment comprises a TV, set-top box, cell phone, tablet, or other electronic device that performs transform method(s) according to any of the embodiments described.

At least one embodiment comprises a TV, set-top box, cell phone, tablet, or other electronic device that performs transform method(s) determination according to any of the embodiments described, and that displays (e.g., using a monitor, screen, or other type of display) a resulting image.

At least one embodiment comprises a TV, set-top box, cell phone, tablet, or other electronic device that selects, bandlimits, or tunes (e.g., using a tuner) a channel to receive a signal including an encoded image, and performs transform method(s) according to any of the embodiments described.

At least one embodiment comprises a TV, set-top box, cell phone, tablet, or other electronic device that receives (e.g., using an antenna) a signal over the air that includes an encoded image, and performs transform method(s).

**Claims**

1. A method, comprising:

    initializing points as over-segmented three-dimensional Gaussians, wherein a representative of a Gaussian cluster is initialized with point coordinates of input sparse points and with isotropic shapes;
    cloning or splitting at least one three-dimensional Gaussian and assigning the cloned or split three-dimensional Gaussian to its same Gaussian cluster;
    optimizing the cloned or split Gaussians and generating a new segment if a distance metric is greater than a threshold, until the distance metric is lower than the threshold; and,
    performing subsequent image processing using the optimized Gaussians.

2. An apparatus, comprising:
    a memory and a processor, configured to:

initialize points as over-segmented three-dimensional Gaussians, wherein a representative of a Gaussian cluster is initialized with point coordinates of input sparse points and with isotropic shapes;

clone or split at least one three-dimensional Gaussian and assign the cloned or split three-dimensional Gaussian to its same Gaussian cluster;

optimize the cloned or split Gaussians and generating a new segment if a distance metric is greater than a threshold, until the distance metric is lower than the threshold; and,

perform subsequent image processing using the optimized Gaussians.

3. A method, comprising:

computing an octree with an initially fixed voxel size using a point cloud with three-dimensional Gaussian centers;

determining a three-dimensional Gaussian representative for each octree voxel based on a characteristic;

assigning a matching three-dimensional Gaussian representative to each Gaussian center based on a distance metric belonging to a voxel volume;

updating three-dimensional Gaussian representatives belonging to the voxel volume while a residual error is larger than said distance metric until said distance metric is lower than a threshold; and,

performing subsequent image processing using the updated three-dimensional Gaussian representatives.

4. An apparatus, comprising:
a memory and a processor, configured to:

compute an octree with an initially fixed voxel size using a point cloud with three-dimensional Gaussian centers;

determine a three-dimensional Gaussian representative for each octree voxel based on a characteristic;

assign a matching three-dimensional Gaussian representative to each Gaussian center based on a distance metric belonging to a voxel volume;

update three-dimensional Gaussian representatives belonging to the voxel volume while a residual error is larger than said distance metric until said distance metric is lower than a threshold; and,

perform subsequent image processing using the updated three-dimensional Gaussian representatives.

5. The method of any one of Claims 1 or 3, or the apparatus of any one of claims 2 or 4, wherein said distance metric comprises a weighted sum of position, shape, orientation opacity, and color distances.

6. The method of Claim 1 or the apparatus of Claim 2, wherein said initializing points is performed via structure from motion.

7. The method of Claim 1 or the apparatus of Claim 2, wherein said distance metric is measured between each three-dimensional Gaussian and either its corresponding Gaussian cluster representative or Gaussian segment centroid.

8. The method of Claim 1 or the apparatus of Claim 2, wherein optimization is performed for a given number of iterations.

9. The method of Claim 3 or the apparatus of Claim 4, wherein the three-dimensional Gaussian representative is chosen based on color or shape.

10. The method of Claim 3 or the apparatus of Claim 4, wherein the three-dimensional Gaussian representative is chosen based on it having smaller color gradients with respect to its neighbors.

11. The method of Claim 3 or the apparatus of Claim 4, further comprising determining a distance between previous and updated three-dimensional Gaussian centers after an update.

12. The method of any one of Claims 1 or 3, or the apparatus of any one of Claims 2 or 4, implemented in an encoder or decoder.

13. A device comprising:

an apparatus according to Claim 2; and

at least one of (i) an antenna configured to receive a signal, the signal including a video block, (ii) a band limiter configured to limit the received signal to a band of frequencies that includes the video block, and (iii) a display configured to display an output representative of the video block.

14. A non-transitory computer readable medium containing data content generated according to the method of any one of Claims 1 or 3, for playback using a processor.

15. A non-transitory computer readable storage medium containing program code which, when the program code is executed by a computer, cause the computer to carry out the method of any one of Claims 1 or 2, for playback using a processor.

Figure 1

Segment $l = 1$

Segment $l = 2$

3DG representative of segment 2
Characterized by $\mu^2, S^2, q^2, \alpha^2, \{c_i{}^2 | i = 1, \dots, n\}$

3DG representative of segment 1
Characterized by
$\mu^1, S^1, q^1, \alpha^1, \{c_i{}^1 | i = 1, \dots, n\}$

Figure 2

Figure 3

Figure 4

EP 4 648 428 A1

500

```
┌─────────────────────┐
│                     │
│        Start        │     501
│                     │
└─────────────────────┘
           │
           ▼
┌─────────────────────┐
│  Initializing points as │     510
│        3DGs         │
└─────────────────────┘
           │
           ▼
┌─────────────────────┐
│  Cloning/Splitting  │     520
│        3DGs         │
└─────────────────────┘
           │
           ▼
┌─────────────────────┐
│  Optimizing cloned  │     530
│    or split 3DGs    │
└─────────────────────┘
           │
           ▼
┌─────────────────────┐
│  Subsequent image   │     540
│     processing      │
└─────────────────────┘
           │
           ▼
```

Figure 5

600

```
           ┌─────────────────────┐
           │                     │
           │       Start         │      601
           │                     │
           └──────────┬──────────┘
                      │
                      ▼
           ┌─────────────────────┐
           │  Computing octree   │      610
           └──────────┬──────────┘
                      │
                      ▼
           ┌─────────────────────┐
           │  Determining 3DG    │
           │ representative for  │      620
           │  each octree voxel  │
           └──────────┬──────────┘
                      │
                      ▼
           ┌─────────────────────┐
           │ Assign matching 3DGs│
           │to each Gaussian center│    630
           │  based on distance  │
           └──────────┬──────────┘
                      │
                      ▼
           ┌─────────────────────┐
           │   Updating 3DG      │
           │representatives until│      640
           │  distance is met    │
           └──────────┬──────────┘
                      │
                      ▼
           ┌─────────────────────┐
           │    Subsequent       │
           │  image processing   │      650
           └─────────────────────┘
```

Figure 6

700

```
┌─────────────────────────────────┐
│                                 │
│                                 │
│           Processor             │──────────►
│                                 │
│                              710│
└─────────────────────────────────┘
               ▲
               │
               ▼
┌─────────────────────────────────┐
│           Memory             720│
└─────────────────────────────────┘
               │
               ▼
```

Figure 7

800

Pre-encoding processing 101

Image Partitioning 102

Transform 125

Quantization 130

Entropy Coding 145

Inverse Quantization 140

Inverse Transform 150

110

155

Intra prediction 160

In-loop Filters 165

105

Motion Compensation 170

Motion Estimation 175

Reference Picture Buffer 180

Figure 8

900

Entropy Decoding [230] → Partitioning [235] → Inverse Quantization [240] → Inverse Transform [250] → [255] ⊕ → In-loop Filters [265] → Post-decoding processing [285]

Intra Prediction [260]

[270]

Motion Compensation [275]

Reference Picture Buffer [280]

Figure 9

**1000**

Figure 10

| | Europäisches Patentamt |
| | European Patent Office |
| | Office européen des brevets |

## EUROPEAN SEARCH REPORT

**Application Number**

EP 24 30 5729

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHARATH GIRISH ET AL: "EAGLES: Efficient Accelerated 3D Gaussians with Lightweight EncodingS", ARXIV.ORG, CORNELL UNIVERSITY LIBRARY, 201 OLIN LIBRARY CORNELL UNIVERSITY ITHACA, NY 14853, 24 April 2024 (2024-04-24), XP091737389, * pages 2,4,8; figure 2 * | 1,2,5-8, 12-15 | INV. H04N21/81 |
| X | BERNHARD KERBL ET AL: "3D Gaussian Splatting for Real-Time Radiance Field Rendering", ARXIV.ORG, CORNELL UNIVERSITY LIBRARY, 201 OLIN LIBRARY CORNELL UNIVERSITY ITHACA, NY 14853, 8 August 2023 (2023-08-08), XP091588895, * page 5 * | 1,2,5-8, 12-15 | |
| X | GUANGCHI FANG ET AL: "Mini-Splatting: Representing Scenes with a Constrained Number of Gaussians", ARXIV.ORG, CORNELL UNIVERSITY LIBRARY, 201 OLIN LIBRARY CORNELL UNIVERSITY ITHACA, NY 14853, 21 March 2024 (2024-03-21), XP091706685, * pages 4-6 * | 1,2,5-8, 12-15 | TECHNICAL FIELDS SEARCHED (IPC) H04N |

The present search report has been drawn up for all claims

| Place of search | Date of completion of the search | Examiner |
|---|---|---|
| The Hague | 25 September 2024 | Folea, Octavian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

| Europäisches Patentamt<br>European Patent Office<br>Office européen des brevets | | **Application Number**<br>**EP 24 30 5729** |

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1, 2, 5-8, 12, 13, 15(completely); 14(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

    1. claims: 1, 2, 5-8, 12, 13, 15(completely); 14(partially)

        the 3DGs grouping is done based on a distance between the 3D
        Gaussians
                        ---

    2. claims: 3, 4, 9-11(completely); 14(partially)

        the 3DGs grouping is done based on octree voxels
                        ---